(19) Europäisches Patentamt
European Patent Office
Office européen des brevets

(11) Numéro de publication: **0 114 013**
**B1**

(12) # FASCICULE DE BREVET EUROPÉEN

(45) Date de publication du fascicule du brevet: **22.07.87**

(51) Int. Cl.⁴: **G 02 F 1/13**, G 05 D 23/24

(21) Numéro de dépôt: **83402410.1**

(22) Date de dépôt: **13.12.83**

(54) **Système d'asservissement en température d'un dispositif thermo-actif.**

(30) Priorité: **21.12.82 FR 8221404**

(43) Date de publication de la demande: **25.07.84 Bulletin 84/30**

(45) Mention de la délivrance du brevet: **22.07.87 Bulletin 87/30**

(84) Etats contractants désignés: **DE GB IT NL**

(56) Documents cité:
**GB-A-2 015 206**
**US-A-3 700 933**
**US-A-4 115 860**

(73) Titulaire: **THOMSON- CSF, 173, Boulevard Haussmann, F-75379 Paris Cedex 08 (FR)**

(72) Inventeur: **Hehlen, Robert, THOMSON- CSF SCPI 173, bld Haussmann, F-75379 Paris Cedex 08 (FR)**
Inventeur: **Marcenac, Philippe, THOMSON- CSF SCPI 173, bld Haussmann, F-75379 Paris Cedex 08 (FR)**

(74) Mandataire: **Lepercque, Jean, THOMSON- CSF SCPI 19, avenue de Messine, F-75008 Paris (FR)**

**EP 0 114 013 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention se rapporte à un système d'adressage électrique asservi en température d'un dispositif dont le fonctionnement est tributaire de l'échauffement local communiqué à une couche de matériau thermo-actif par une electrode. L'invention s'applique particulièrement au cas des écrans de visualisation à commande matricielle utilisant un cristal liquide du type smectique et un jeu de bandes conductrices chauffées transitoirement par effet Joule.

Les électrodes provoquant l'échauffement de la couche d'un matériau tel qu'un cristal liquide, sont successivement traversées par un courant de chauffage impulsionnel et récurrent. La température de fonctionnement du dispositif étant bien définie suivant le matériau utilisé, il est clair que la puissance électrique de chauffe nécessaire pour atteindre cette température dépend fortement de la résistance de l'électrode et de sa variation avec la température. S'il est relativement aisé de contrôler cette puissance en fonction de la température ambiante, il est bien plus difficile de tenir compte des températures locales à l'intérieur du dispositif. Suivant le type d'utilisation, il apparaît des gradients importants d'une électrode à l'autre. Afin d'apporter à l'électrode concernée l'énergie nécessaire mais suffisante pour accomplir le cycle thermique imposé par les caractéristiques du matériau thermo-actif, il est avantageux d'asservir en température le dispositif en tenant compte des particularités des électrodes résistantes.

Il est connu d'asservir thermiquement de tels dispositifs en mettant en oeuvre un microprocesseur. Le courant dans l'électrode résultant de l'application d'une impulsion de tension d'amplitude V et de durée T, on peut moduler la puissance fournie pour le chauffage d'une électrode en agissant sur la durée T et en gardant fixe l'amplitude V. Le microprocesseur gère une mémoire morte contenant les réseaux de courbes "largeur de l'impulsion en fonction de la température". Le microprocesseur tient compte de l'adresse de l'électrode et de ses conditions d'excitation antérieures: nombre de fois que l'électrode a été sollicitée dans une période de temps donné, temps écoulé depuis la dernière sollicitation, etc...

A partir de ces données, il va appeler dans la mémoire la largeur de l'impulsion qui convient. Le défaut de cette méthode est qu'elle nécessite une gestion au moyen de données figées qui tient difficilement compte de tous les paramètres réels et de toutes les possibilites d'utilisation. En effet, l'état thermique du matériau en contact avec une électrode n'est connu que par des données extérieures à l'interface électrode-matériau.

Afin de pallier ces inconvénients, l'invention propose un circuit d'asservissement en température qui utilise les électrodes chauffantes comme autant de capteurs de température. L'utilisation des électrodes en tant que capteurs est basée sur la propriété qu'ont la plupart des matériaux conducteurs de modifier leur résistance électrique en fonction de la température. Il est alors possible de connaître le plus précisément possible la température de l'interface électrode chauffante-matériau actif et d'apporter à ce matériau la quantité de chaleur juste nécessaire à son bon fonctionnement.

L'invention a donc pour objet un système d'asservissement en température d'un dispositif dont le fonctionnement est tributaire de l'échauffement local apporté à une couche de matériau thermo-actif, ledit échauffement local étant produit par le passage d'un courant électrique transitoire dans une électrode appartenant à un ensemble délectrodes placées au voisinage immédiat de ladite couche, ledit système comprenant une mémoire contenant des données relatives à la commande thermique de ladite électrode et des moyens réalisant l'adressage thermique de ladite électrode en fonction desdites donnees, caractérisé en ce que, chaque electrode est faite d'un matériau conducteur présentant un coefficient de température, qu'une resistance r également traversée par au moins une partie dudit courant de chauffage est prévue, et que la différence de potentiel v apparaissant aux bornes de ladite résistance representative de l'évolution de l'échauffement de l'électrode permet, par comparaison avec les informations contenues dans ladite mémoire, de commander la fourniture locale de la quantité de chaleur nécessaire au parcours d'un cycle d'échauffement et refroidissement dudit matériau thermo-actif.

L'invention sera mieux comprise et d'autres avantages apparaîtront dans la description qui va suivre ainsi que dans les figures annexées, parmi lesquelles:

- la figure 1 représente un écran de visualisation à cristal liquide smectique et son circuit de commande;
- les figures 2 et 3 sont des schémas électriques explicatifs de l'invention;
- les figures 4 et 5 sont des schémas d'un système d'asservissement selon l'invention;
- les figures 6 à 8 représentent des parties d'un schéma général du système d'asservissement selon l'invention.

Parmi les dispositifs fonctionnant sur le principe du changement d'état ou de certaines propriétés physico-chimiques, consécutif à une modification de la température d'un matériau actif, on relève le cas typique des écrans de visualisation à cristal liquide smectique à affichage matriciel.

La figure 1 représente un écran de visualisation à cristal liquide smectique d'un type couramment utilisé et son circuit de commande. L'écran de visualisation est formé de deux lames 2 et 3 supportant respectivement des réseaux d'électrodes 4 et 5 qui se croisent orthogonalement. Une couche de cristal liquide 1 est insérée entre les lames 2 et 3 dans un espace d'environ 15 micromètres d'épaisseur défini par des cales d'épaisseur non représentées. Dans cet exemple de réalisation, les électrodes 5 qui sont les connexions de lignes de la matrice de visualisation sont également les électrodes chauffantes de l'écran. Les électrodes 4 représentent les connexions de colonnes de la matrice. Pour ne pas compliquer la figure, on n'a représenté que deux lignes et deux colonnes de l'écran. Le signal électrique incident, représentatif des informations (caractères ou image) à afficher, est d'abord reçu par un circuit 6 qui sépare les signaux affectés aux lignes de ceux affectés aux

colonnes. Les signaux permettant d'appliquer les champs électriques à chaque élément de l'écran défini par l'intersection d'une ligne et d'une colonne, sont envoyés vers un circuit 8 de commande de colonne et qui possède une mémoire tampon. Les signaux correspondant à la commande du courant de chauffage i qui traverse successivement chaque connexion de ligne sont dirigés vers le circuit 9. Une horloge 7 permet la coordination des signaux électriques de commande par son action sur les circuits 8 et 9 en fonction des opérations effectuées par le circuit séparateur 6.

Les lames 2 et 3 sont en verre et ont une épaisseur comprise, par exemple, entre 1,5 et 3 mm. Pour un écran fonctionnant en réflexion, on peut choisir les électrodes 5 en aluminium de façon à réfléchir la lumière incidente, et les électrodes 4 en un matériau conducteur et transparent tel que l'oxyde mixte d'indium et d'étain. La couche de cristal liquide smectique est par exemple un mélange de biphényles tel que:

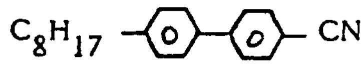

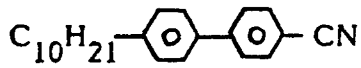

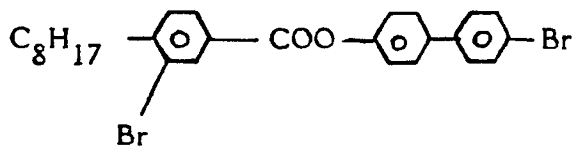

qui possède les transitions de phases suivantes:

$$K \xrightarrow{6°\,C} S_A \xrightarrow{53°\,C} N \xrightarrow{56°\,C} I$$

Des écrans de visualisation du type décrit ci-dessus ont couramment une surface de 10 X 10 cm et un reseau matriciel de 256 lignes pour 400 colonnes. La température moyenne de l'écran en fonctionnement est de l'ordre de 30° C. Les constantes de temps thermiques de la cellule ne permettant pas une évacuation instantanée de la chaleur, la température moyenne d'une ligne dépend du nombre de fois qu'elle a été chauffée dans un espace de temps fini. C'est ce qui apparaît lors du fonctionnement en mode interactif où simplement quelques lignes de la matrice sont balayées avec une récurrence qui peut être de 0,5 seconde au lieu de 2,5, comme c'est généralement le cas pour une utilisation de l'écran dans sa totalité.

On remarque sur la figure 1 que les électrodes chauffantes 5 ont toutes une extrémité reliée à la masse. Afin de déceler la variation de résistance des électrodes lignes en fonction de la température, l'invention propose d'associer une résistance r dans le circuit des électrodes 5 comme le montre la figure 2 où r est placée en série. Sur cette figure, $R_1$, $R_2$,... $R_j$... $R_n$ représentent les résistances des électrodes lignes de l'écran décrit plus haut. r est choisie beaucoup plus petite que les résistances des électrodes lignes qui présentent un coefficient de température α. Dans le cas d'électrodes en aluminium, le coefficient $\alpha = \frac{dR}{R\,d\theta}$ est positif et de l'ordre de $3.10^{-3}$ par degré centigrade (dR représente la variation de la résistance R pour une variation de température dθ). Le courant i dans r et la tension v à ses bornes sont dépendants de la valeur des résistance $R_j$ à la température θ:

$$(R_j)_\theta = Ro\,(1 + \alpha\,\theta)$$

Ro étant la résistance d'une électrode ligne qui théoriquement a la même valeur que les autres résistances lignes. Il est donc possible de lier l'information v à la température de la ligne.

La figure 3 est une figure explicative des tensions présentes aux extrémités d'une électrode ligne lorsque l'on applique un créneau de tension d'amplitude V et de largeur τ à une électrode chauffante de résistance $R_j$. La tension v qui apparaît alors aux bornes de la résistance r est:

$$v = \frac{rV}{Ro\,(1 + \alpha\theta)}.$$

La tension $v_1$ pour une température "ambiante" $\theta_1$ (à l'intérieur de l'écran) est:

$$v_1 = \frac{rV}{Ro\,(1 + \alpha\theta_1)}$$

au début de l'application du créneau de tension. A la fin de ce créneau, la valeur de la résistance $R_j$ a augmenté avec la température qui est alors $\theta_2$. A la fin de l'application du creneau de tension, $v_2 = \frac{rV}{Ro\,(1 + \alpha\theta_2)}$, est inférieure à $v_1$. $\theta_2$ est la température de consigne qui est au moins égale à la température d'isotropie du cristal liquide. En pratique, on prendra $\theta_2$ supérieure de 2 ou 3° C à la température d'isotropie. La résistance des

électrodes chauffantes pour un écran tel que celui décrit plus haut est de l'ordre de 30 Ω, la résistance r de l'ordre de 1 Ω et le courant de chauffage environ 1A.

Il existe en outre une dispersion des valeurs des résistances des électrodes chauffantes. En effet, il existe, par construction, une inhomogénéité des valeurs due aux différences d'épaisseur et de largeur des électrodes. Les résistances des électrodes chauffantes sont alors connues à 10 % près. La tension $v_2$, représentative de la température de consigne, a donc une valeur propre pour chaque électrode chauffante.

Si l'on mémorise pour chaque ligne la valeur $v_2$ qui lui est propre au cours d'un balayage satisfaisant au point de vue du contraste de l'affichage, on peut de façon réciproque couper l'impulsion de chauffage lorsque v atteint la valeur $v_2$. De cette façon, on asservit la largeur $\tau$ de l'impulsion pour chaque électrode de ligne de la matrice. Les différences de température relativement importantes qui apparaissent sur ces électrodes lors du fonctionnement, sont alors prises en considération.

Le bon fonctionnement du système a été établi expérimentalement en mémorisant les valeurs $v_2$ à $\pm$ 1 mV, pour une dispersion maximale de 100 mV. La digitalisation de l'information nécessite donc 7 bits au minimum. Pratiquement, les valeurs de v sont 1V $\pm$ 50 mV.

Plusieurs réalisations du système d'asservissement sont possibles. On peut, par exemple, associer à l'écran une mémoire PROM (mémoire morte) dans laquelle sont inscrites les informations $v_2$ représentatives de toutes les lignes: 256 informations pour le cas considéré à raison de 8 bits (valeur normalisée) par information.

La figure 4 est un schéma de réalisation d'un asservissement selon l'invention. L'ensemble des électrodes chauffantes, cataloguées $R_1$ à $R_n$, est délimité par le trait interrompu 10. La résistance r recueille la tension v. Le système nécessite une mémorisation des valeurs v. La première opération consiste donc en l'inscription de la mémoire 12 qui est une mémoire du type PROM. Le système d'asservissement comprend un bus d'adresses 11, un circuit d'interface chauffage 13, un convertisseur analogique-digital 14, un comparateur 15, un monostable 16, un circuit 17 de commande de la durée $\tau$ de l'impulsion de chauffage et la mémoire 12. Au moyen du bus d'adresses, on commande les électrodes chauffantes les unes après les autres. La tension v correspondante est envoyée au convertisseur 14. Lorsque la tension $v_2$ est jugée satisfaisante, le comparateur est rendu "transparent" pour l'information digitale qui s'inscrit dans la mémoire 12. Lorsque toutes les électrodes chauffantes ont été ainsi testées, l'écran est prêt à l'usage. Si l'on désire afficher une image ou des caractères sur l'écran, l'information du choix de l'électrode chauffante est transmise par le bus 11 et déclenche l'impulsion de chauffage par l'intermédiaire du monostable 16 et du circuit 17. Le comparateur 15 reçoit d'une part un signal digital de la mémoire 12 qui sert de référence pour l'électrode en cours de chauffage. Il reçoit d'autre part un signal digital venant du convertisseur 14 et représentatif de la tension v. Lorsque les valeurs digitales des signaux transmis au comparateur sont identiques, celui-ci transmet un signal de commande au monostable 16 qui coupe l'impulsion chauffage par l'intermédiaire du circuit 17.

Ce système d'asservissement qui utilise une mémoire PROM présente l'inconvénient inhérent à ce type de mémoire, à savoir l'impossibilité de modifier les valeurs $v_2$ que l'on a mémorisées. Dans ce système, on associe une mémoire par écran. Afin de pouvoir modifier les valeurs mémorisées, on peut utiliser une mémoire du type RAM.

La figure 5 est un schéma de réalisation d'un asservissement selon l'invention et qui utilise une mémoire du type RAM. Comme précédemment, les électrodes chauffantes sont répertoriées $R_1$ à $R_n$. Le système comprend un circuit 21 d'interface chauffage et une mémoire 22 de type RAM, qui reçoivent les adresses lignes par l'intermédiaire du bus 20. Le système comprend d'abord une phase d'inscription des tensions $v_2$ dans la mémoire 22. Pour cela, les tensions $v_2$ correspondant à un bon contraste sont envoyées à un comparateur analogique 23 qui, dans la phase d'inscription, ne fait que transmettre l'information vers un compteur 24 qui compte le nombre d'impulsions qui lui sont fournies par une horloge 25. Le compteur 24 transmet une information comprenant 8 bits via un circuit tampon 26 "TROIS ETATS" qui est ensuite mémorisée dans le circuit 22. L'opération d'inscription est conditionnée, par exemple, par un niveau 0 appliqué au circuit tampon.

Pour l'écran en fonctionnement normal en affichage, la tension v caractéristique de l'état thermique d'une électrode chauffante est comparée grâce au circuit 23 à la valeur $v_2$ de cette électrode. Cette valeur est issue de la mémoire 22 à travers le circuit tampon 26, après passage dans un convertisseur digital-analogique 27. La lecture de la mémoire 22 est réalisée par un ordre donné au circuit 26 (par exemple niveau 1 délivré grâce à l'interrupteur K au circuit tampon 26). Tant que les deux tensions comparées ne sont pas égales, l'impulsion de chauffage continue son action sur l'électrode sélectionnée. Lorsque les valeurs des signaux comparés sont égales, le comparateur transmet un signal de commande au monostable 28 qui coupe l'impulsion chauffage par l'intermdiaire du circuit 29 (circuit de commande de la durée $\tau$). L'avantage de ce système d'asservissement est de pouvoir être calibré à tout moment.

Un système d'asservissement plus élaboré consiste à ne prendre en compte que des variations relatives des différentes valeurs de $v_2$ soit $\Delta v_2$ pour chaque électrode chauffante. Ceci est effectué en mémorisant, lors d'un premier essai de l'écran, toutes les variations de la tension v par rapport à une valeur prise comme référence, pour une même durée $\tau$ de l'impulsion de chauffage. Si on choisit dans un écran, une électrode présentant une certaine résistance comme référence, la dispersion des résistances des autres électrodes se trouve en principe de part et d'autre de la résistance de référence. Dans les versions précédentes, on mettait en mémoire une information représentative de la valeur de chaque résistance d'électrode chauffante. Dans cette nouvelle version, on mettra en mémoire une information représentative de la variation de résistance par rapport à une résistance prise comme référence.

Pour une bonne compréhension du système d'asservissement, il est souhaitable de procéder à une

explication en trois temps. A chaque stade d'explication correspondra un schéma qui n'est qu'une partie d'un schéma général.

La première électrode chauffante est par exemple choisie comme référence. La figure 6 est un schéma descriptif de l'adressage d'une première électrode chauffante au début du processus d'asservissement. Le comparateur digital-analogique 30 est d'abord réglé pour délivrer une tension qui se situe au milieu de sa gamme de fonctionnement. Pour cela, on charge le compteur 31 à sa valeur médiane {0 1111111}. Une impulsion délivrée par le signal de fréquence ligne (électrode chauffante 1) $f_1$ déclenche le chauffage de la première électrode de résistance $R_1$ par l'intermédiaire du circuit de chauffage 34. La même impulsion agit sur l'entrée "remise à zéro" (CLR) du compteur 32 qui commence à compter les impulsions délivrées par l'horloge 35 (de fréquence 5 kHz). Par son action sur l'entrée "mise à 1" (PR, preset) de la bascule D 37, le signal de fréquence ligne $f_1$, provoque la mise à l'état 1 de la sortie Q de la bascule 37 et rend possible le comptage des impulsions délivrées par l'horloge 35 (la porte ET 36 laisse en effet passer ces impulsions). La température de l'électrode mise en service augmente ainsi que sa résistance, ce qui entraîne une diminution de la tension v aux bornes de r. Au bout d'un certain temps $\tau$, le comparateur différentiel 38 se déclenche (du fait de l'évolution des tensions présentes sur ses entrées). Le déclenchement du circuit 38 produit la mise à zéro de la sortie Q de la bascule 37, par son action sur l'entrée "mise à zéro" (CLR). Le circuit 32 s'arrête de compter et contient une information représentative du temps $\tau$. Cette durée d'application de la tension de chauffage sera ensuite appliquée à toutes les autres électrodes chauffantes. La dispersion des valeurs des électrodes chauffantes autour de l'électrode prise comme référence étant assez faible, les valeurs des autres tensions v seront assez proches de la tension trouvée pour la première électrode. La dispersion des valeurs à mémoriser dans la mémoire RAM 39 se fera autour de la valeur correspondant à l'information {0 1111111}. Les résistances $\rho_1$, $\rho_2$ et $\rho_3$ sont calculées, en fonction des résistances $R_j$ et r, de façon à obtenir une durée $\tau$ considérée comme probable pour un fonctionnement correct de l'ecran.

La figure 7 est un schéma descriptif d'un premier adressage de l'écran en entier après adressage de l'électrode de référence. Pour chaque électrode chauffante, on lance le temps chauffage. Le compteur 33 sera chargé par l'information digitale correspondant à $\tau$ et issue du compteur 32 qui mémorise le temps $\tau$ pour la première électrode chauffante. Pour traiter une électrode chauffante j, un signal de fréquence ligne $f_j$ agit sur les circuits suivants:

- circuit 34: chauffage de la ligne j,
- bascule D 41: mise à l'état 1 de la sortie Q par action sur l'entrée PR,
- compteur 33: chargement du compteur par action sur l'entrée Ld,
- compteur 31: chargement de l'information {11111111} par action sur l'entrée Ld.

Au début du processus de chauffage, la sortie du circuit 38 étant à l'état 1, la sortie de la porte ET 42 est aussi à l'état 1. Le compteur 33 décompte (action sur l'entrée décomptage Dw) au rythme de l'horloge 35 (horloge 5 kHz) dont les impulsions sont transmises par la porte ET 43. Le compteur 31 décompte (action sur son entrée décomptage Dw) au rythme de l'horloge 40 (horloge 100 kHz). Il adresse le convertisseur 30 pour effectuer la comparaison analogique avec la tension v qui est présente sur r. Lorsque le décomptage du compteur 33 est achevé, sa sortie retenue (B pour "borrow") envoie une impulsion à l'entrée "remise à zéro" (CLR) de la bascule 41 dont la sortie Q passe à l'état 0. La sortie de la porte 42 passe à l'état 0, le compteur 31 s'arrête de décompter et l'information présente en sortie du compteur 31 est mise en mémoire dans le circuit 39.

La figure 8 est un schéma descriptif des adressages postérieurs de l'écran. Pour chaque ligne, un signal de fréquence ligne $f_j$ déclenche la mise en chauffe de l'électrode j et le début du contrôle du temps $\tau$ par la bascule 37. La mémoire 39 fournit au convertisseur 30 la valeur binaire qui correspond à l'électrode sélectionnée. La tension de sortie du circuit 30 va servir de tension de comparaison pour déterminer le moment de la coupure du temps de chauffage. Les électrodes peuvent être ainsi successivement adressées. Il est alors possible d'agir sur le contraste de l'écran en modifiant la valeur de $\rho_1$ qui sera le potentiomètre de contraste de l'écran.

Le système d'asservissement en température selon l'invention se prête particulièrement bien au cas des écrans de visualisation à cristal liquide smectique. Il est avantageux de placer la résistance r le plus près possible des électrodes chauffantes. On peut la placer sur un côté de l'écran à proximité du point commun réunissant les électrodes chauffantes. Elle peut être réalisée par dépôt d'une couche métallique sur l'un des bords de l'écran. Afin de la soustraire à l'influence de la température environnante, on peut employer un matériau conducteur stable en température tel que celui connu sous la marque déposée INVAR.

Il entre dans le cadre de l'invention d'appliquer ce système d'asservissement à tous les dispositifs qui utilisent une couche de matériau thermo-actif et qui fonctionnent par échauffement local de cette couche, l'échauffement étant provoqué par un courant qui traverse des électrodes. L'exemple donné, écran plat smectique à faible vitesse d'inscription, n'est pas limitatif: le système d'asservissement est utilisable quelles que soient les dimensions (écran plat, écran de projection de diapositives, etc...) et les vitesses d'inscription (lentes ou vitesses télévision). Il peut être utilisé en réflexion ou en transmission, ou avec des colorants dichroïques. Un autre exemple d'application de l'invention est le cas où le matériau à échauffer possède des propriétés magnéto-optiques tels que ceux répondant aux formules chimiques: $Gd_{3-x}Bi_xFe_{5-y}Ga_yO_{12}$ ou $Sm_xEr_{3-x}Ga_yFe_{5-y}O_{12}$.

La description a surtout porté sur un système d'asservissement pour lequel l'impulsion de chauffage possède une amplitude V constante et un temps dapplication $\tau$ variable. On peut concevoir un asservissement

en température à temps τ constant et amplitude variable.

## Revendications

1. Système d'asservissement en temperature d'un dispositif dont le fonctionnement est tributaire de l'échauffement local apporté à une couche de matériau thermo-actif, ledit échauffement local étant produit par le passage d'un courant électrique transitoire dans une électrode appartenant à un ensemble d'électrodes placées au voisinage immédiat de ladite couche, ledit système comprenant une mémoire contenant des données relatives à la commande thermique de ladite électrode et des moyens réalisant l'adressage thermique de ladite électrode en fonction desdites données, caractérisé en ce que chaque électrode est faite d'un matériau conducteur présentant un coefficient de température, qu'une résistance r également traversée par au moins une partie dudit courant de chauffage est prévue et que la différence de potentiel v apparaissant aux bornes de ladite résistance représentative de l'évolution de l'échauffement de l'électrode permet, par comparaison avec les informations contenues dans ladite mémoire, de commander la fourniture local de la quantité de chaleur nécessaire au parcours d'un cycle d'échauffement et refroidissement dudit matériau thermo-actif.

2. Système d'asservissement selon la revendication 1, caractérisé en ce que ladite électrode de chauffage ($R_j$) fait partie d'un ensemble d'électrodes traversées periodiquement par ledit courant de chauffage (i) qui possèdent un point électrique commun, ladite résistance r étant également rattachée électriquement à ce point.

3. Système d'asservissement selon l'une des revendications 1 ou 2, caractérisé en ce que ladite couche est disposée entre deux réseaux d'électrodes croisés (4, 5), l'un desdits réseaux étant formé par lesdites électrodes chauffantes ($R_j$).

4. Système d'asservissement selon l'une quelconque des revendications 1 à 3, caractérisé en ce que ledit matériau est un matériau électrooptique.

5. Système d'asservissement selon la revendication 4, caractérisé en ce que ledit matériau électrooptique est un cristal liquide possédant une phase smectique.

6. Système d'asservissement selon la revendication 5, caracterisé en ce que ledit cristal liquide smectique est un mélange de plusieurs substances.

7. Système d'asservissement selon l'une quelconque des revendications 1 à 3, caractérisé en ce que ledit matériau possède des propriétés magnétooptiques.

8. Système d'asservissement selon l'une quelconque des revendications 1 à 7, caractérisé en ce que ledit système d'asservissement comprend un convertisseur analogique-digital (14) qui transmet, pour chaque électrode chauffante, ladite différence de potentiel v à l'une des entrées d'un comparateur (15), sa seconde entrée recevant l'information relative à l'électrode analysée et issue de ladite mémoire (12), la sortie dudit comparateur agissant sur des circuits (16, 17) d'ajustement du temps de chauffage τ; ladite mémoire étant une mémoire programmable utilisée en lecture.

9. Système d'asservissement selon l'une quelconque des revendications 1 à 7, caractérisé en ce que ladite mémoire est une mémoire vive (22), ledit système comprenant une étape d'inscription qui peut être renouvelée.

10. Système d'asservissement selon l'une quelconque des revendications 1 à 7, caractérisé en ce que ladite mémoire (39) est une mémoire vive dont l'étape d'inscription est réalisée à partir de la différence de potentiel v délivrée par le passage dudit courant de chauffage (i), pendant un temps τ fixé dans une électrode chauffante prise comme référence, les autres électrodes chauffantes étant ensuite parcourues par ledit courant pendant le même temps τ, les informations relatives à la tension v présente aux bornes de la résistance r pour chaque électrode chauffante au bout du temps τ étant mises en mémoire; l'asservissement en température du dispositif étant ensuite réalisée à partir des informations contenues dans ladite mémoire (39); un potentiomètre ($p_1$) permettant le réglage global en température du dispositif.

## Patentansprüche

1. Temperaturregelungssystem einer Vorrichtung, deren Betrieb von der lokalen Erwärmung einer Schicht aus thermoaktivem Werkstoff abhängig ist, wobei die genannte lokale Erwärmung von dem Durchgang eines transienten Stromes in einer Elektrode erzeugt wird, welche einer Gruppe von Elektroden angehört, die in unmittelbarer Nähe der genannten Schicht angebracht sind, wobei das genannte System einen Speicher mit Daten bezüglich der thermischen Steuerung der genannten Elektrode und mit Mitteln zur Durchführung der thermischen Adressierung der genannten Elektrode gemäss den genannten Daten enthält, dadurch gekennzeichnet, dass jede Elektrode aus einem Leiterwerkstoff hergestellt ist, der einen Temperaturkoeffizienten aufweist, dass ein ebenfalls von mindestens einem Teil des genannten Heizstromes durchflossener Widerstand r vorgesehen ist und dass die an den Anschlussklemmen des genannten Widerstandes auftretende Potentialdifferenz v, welche für den Verlauf der Elektrodenerwärmung

charakteristisch ist, es ermöglicht, durch einen Vergleich mit den in dem genannten Speicher enthaltenen Daten die lokale Lieferung der Wärmemenge zu steuern, welche für die Dauer eines Erwärmungs- und Kühlzyklus für den genannten thermoaktiven Werkstoff erforderlich ist.

2. Regelungssystem nach Anspruch 1, dadurch gekennzeichnet, dass die genannte Heizelektrode ($R_j$) Teil einer Gruppe von Elektroden ist, welche in regelmässigen Abständen von dem genannten Heizstrom (i) durchflossen werden und die einen gemeinsamen elektrischen Punkt besitzen, wobei der Widerstand r ebenafalls elektrisch an diesen Punkt angeschlossen ist.

3. Regelungssystem nach Anspruch 1 oder 2, dadurch gekennzeichnet, dass die genannte Schicht zwischen zwei gekreuzten Elektrodennetzen (4, 5) angebracht ist, wobei eines der genannten Netze von den genannten Heizelektroden ($R_j$) gebildet wird.

4. Regelungssystem nach einem der Ansprüche 1 bis 3, dadurch gekennzeichnet, dass der genannte Werkstoff ein elektrooptischer Werkstoff ist.

5. Regelungssystem nach Anspruch 4, dadurch gekennzeichnet, dass der genannte elektrooptische Werkstoff ein Flüssigkristall mit smektischer Phase ist.

6. Regelungssystem nach Anspruch 5, dadurch gekennzeichnet, dass der genannte smektische Flüssigkristall eine Mischung aus mehreren Stoffen ist.

7. Regelungssystem nach einem der Ansprüche 1 bis 3, dadurch gekennzeichnet, dass der genannte Werkstoff magnetooptische Eigenschaften besitzt.

8. Regelungssystem nach einem der Ansprüche 1 bis 7, dadurch gekennzeichnet, dass das genannte Regelungssystem einen Analog-Digital-Umsetzer (14) enthält, der für jede Heizelektrode die genannte Potentialdifferenz v an einen der Eingänge eines Komparators (15) überträgt, wobei sein zweiter Eingang die aus dem genannten Speicher (12) stammenden Daten bezüglich der analysierten Elektrode empfängt, wobei der Ausgang des genannten Komparators auf die Einstellungskreise (16, 17) der Heizzeit $\tau$ einwirkt, wobei der genannte Speicher ein programmierbarer Lesespeicher ist.

9. Regelungssystem nach einem der Ansprüche 1 bis 7, dadurch gekennzeichnet, dass der genannte Speicher ein Arbeitsspeicher (22) ist, wobei das genannte System eine erneuerbare Schreibstufe enthält.

10. Regelungssystem nach einem der Ansprüche 1 bis 7, dadurch gekennzeichnet, dass der genannte Speicher (39) ein Arbeitsspeicher ist, dessen Lesestufe unter Zugrundlegung der bei dem Durchgang des genannten Heizstroms (i) gelieferten Potentialdifferenz v während einer in einer Heizelektrode als Bezug festgesetzten Zeit $\tau$ erstellt wird, wobei die anderen Heizelektroden anschliessend von dem genannten Strom während derselben Zeit $\tau$ durchflossen werden, wobei die Daten betreffs der in den Widerstandsklemmen r vorhandenen Spannung am Einde der Zeit für jede Heizelektrode gespeichert werden, wobei die Temperaturregelung der Vorrichtung anschliessend unter Zugrundlegung der in dem genannten Speicher (39) enthaltenen Daten vorgenommen wird, wobei ein Potentiometer ($\rho_1$) die gesamte Temperaturregelung der Vorrichtung ermöglicht.

**Claims**

1. Temperature control system of a device whose operation depends on the local heating of a layer of thermo-active material, the said local heating being produced by passing a noncontinuous electric current through an electrode belonging to a set of electrodes placed in the immediate vicinity of the said layer, the said system including a memory containing data relative to the thermal control of the said electrode and means providing the thermal addressing of the said electrode as a function of the said data, wherein each electrode is made of a conductive material exhibiting a temperature coefficient, and wherein a resistor r is provided that also carries at least a part of the said heating current, and further wherein the difference of potential v appearing across the terminals of the said resistor and representing the variation in the heating of the electrode is used, by comparison with the information in the said memory, to control the local supply in the quantity of heat needed through a heating and cooling cycle of the said thermo-active material.

2. Control system according to claim 1, wherein the said heating electrode ($R_j$) is part of a set of electrodes carrying the said heating current (i) periodically, and which has a common electrical point, the said resistor r also being connected electrically to this point.

3. Control system according to either claim 1 or 2, wherein the said layer is placed between two crossed circuits of electrodes (4, 5), one of the two circuits being made up of the said heating electrodes ($R_j$.

4. Control system according to any one claim 1 to 3, wherein the said material is an electro-optical material.

5. Control system according to claim 4, wherein the said electro-optical material is a liquid crystal having one smectic phase.

6. Control system according to claim 5, wherein the said smectic liquid crystal is a mixture of several substances.

7. Control system according to any one claim 1 to 3, wherein the said material has magneto-optical properties.

8. Control system according to any one claim 1 to 7, wherein the said control system includes an analog-digital converter (14) that transmits, for each heating electrode, the said difference of potential v to one of the inputs of a comparator (15), its second input receiving the information relative to the electrode analysed and

coming from the said memory (12), the output of the said comparator acting on circuits (16, 17) adjusting the heating time $\tau$, the said memory being a programmable memory used in read mode.

9. Control system according to any one claim 1 to 7, wherein the said memory is a random access memory (22), the system including a write stage that can be renewed.

10. Control system according to any one claim 1 to 7, wherein the said memory (39) is a random access memory whose write stage is achieved by the difference of potential v delivered by the passage of said heating current (i) during a set time $\tau$ through one heating electrode taken as a reference, the other heating electrodes then being traversed by the said current during the same time $\tau$, the data relative to the voltage v across the terminals of the resistor for each heating electrode at the end of time $\tau$ being stored in memory, the temperature control of the said device then being achieved from the information contained in the said memory (39), a potentiometer ($\rho_1$) providing the overall temperature adjustment of the device.

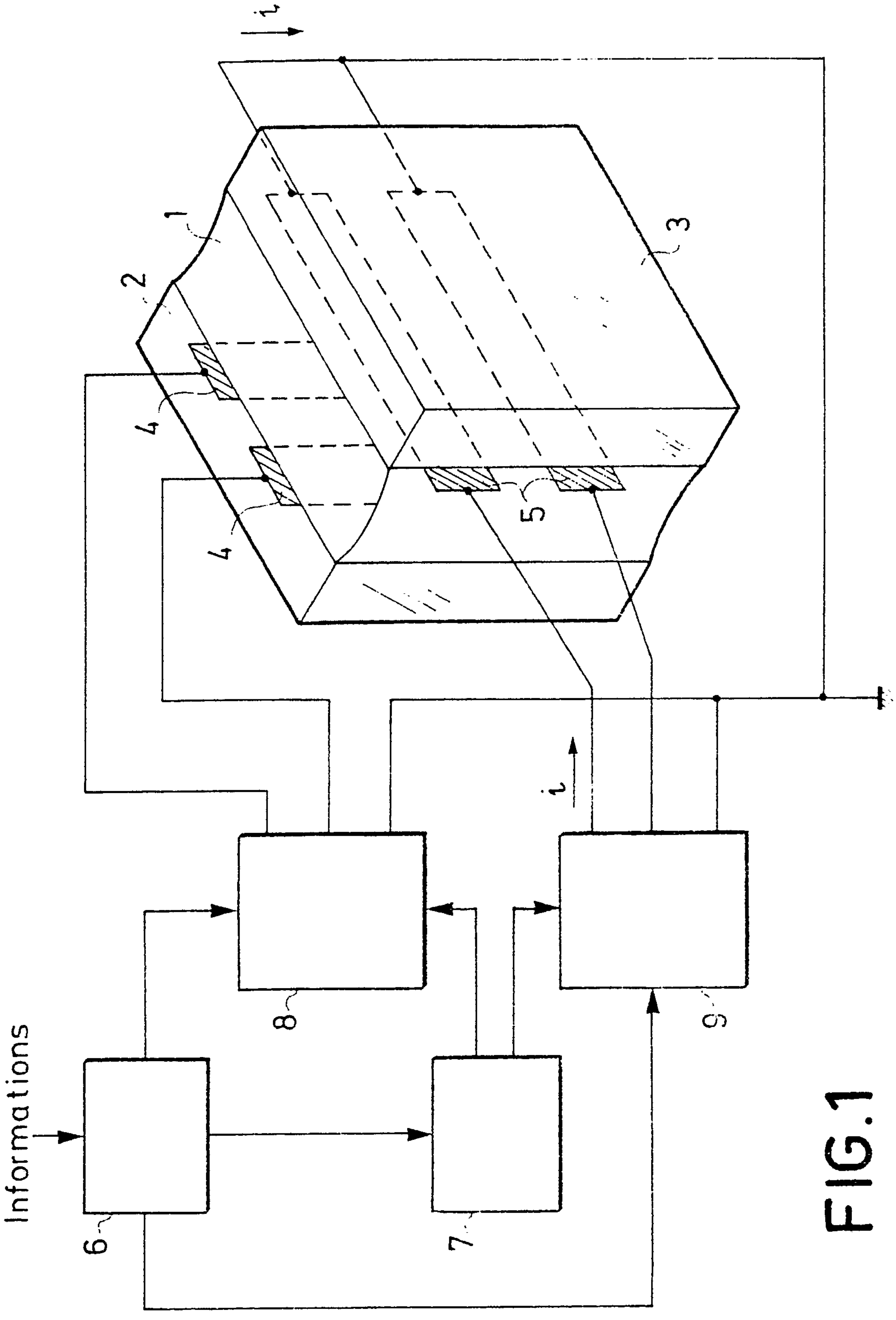


FIG.1

# FIG. 2

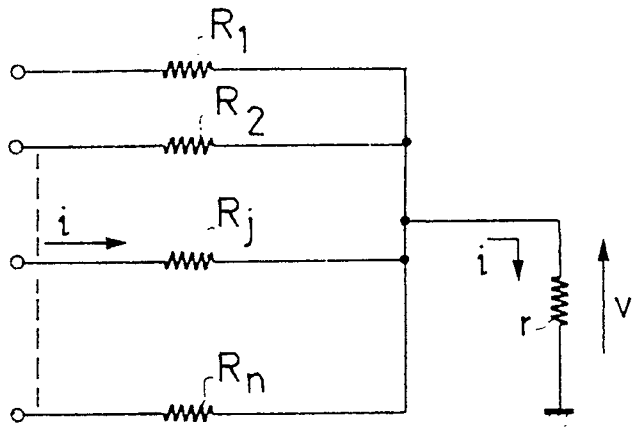


# FIG. 3

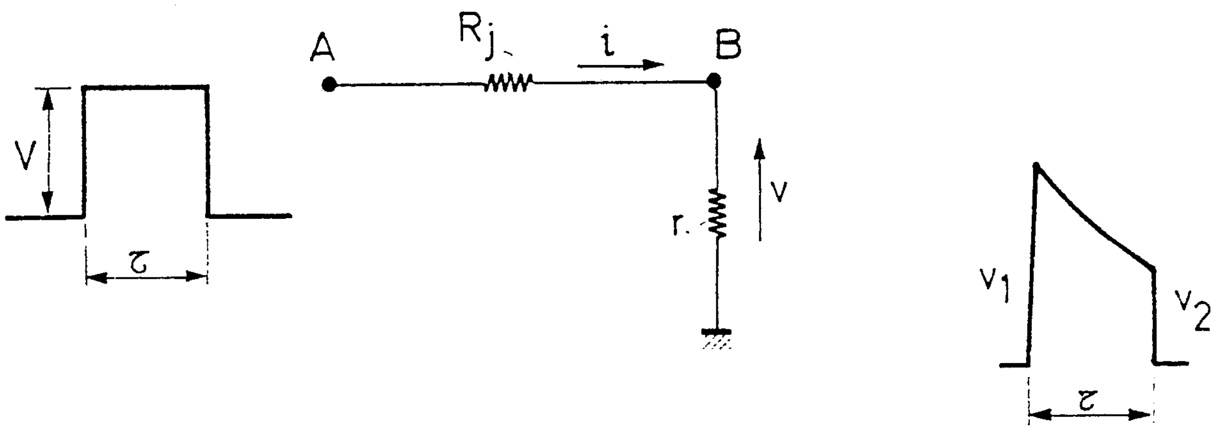

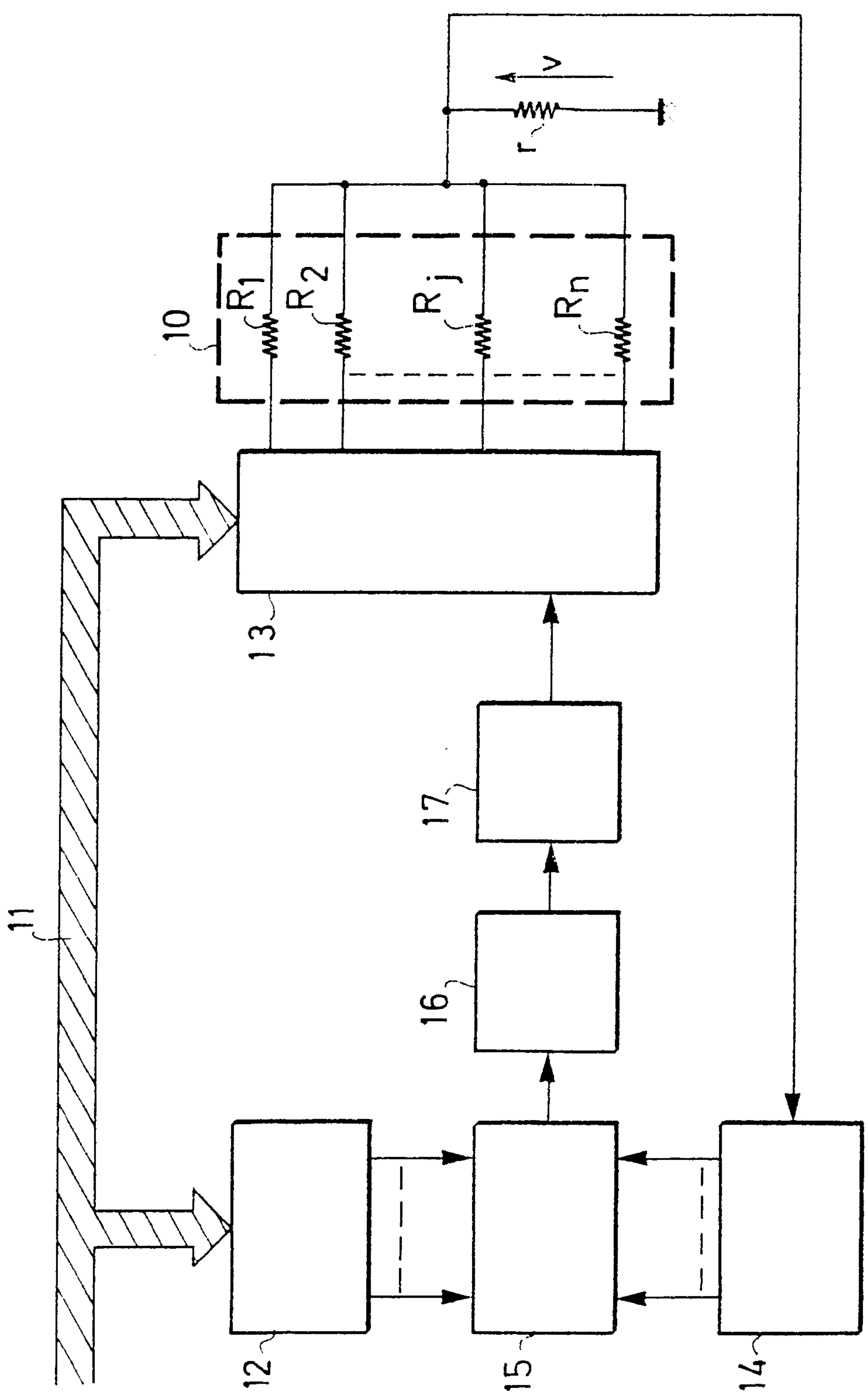


FIG. 4

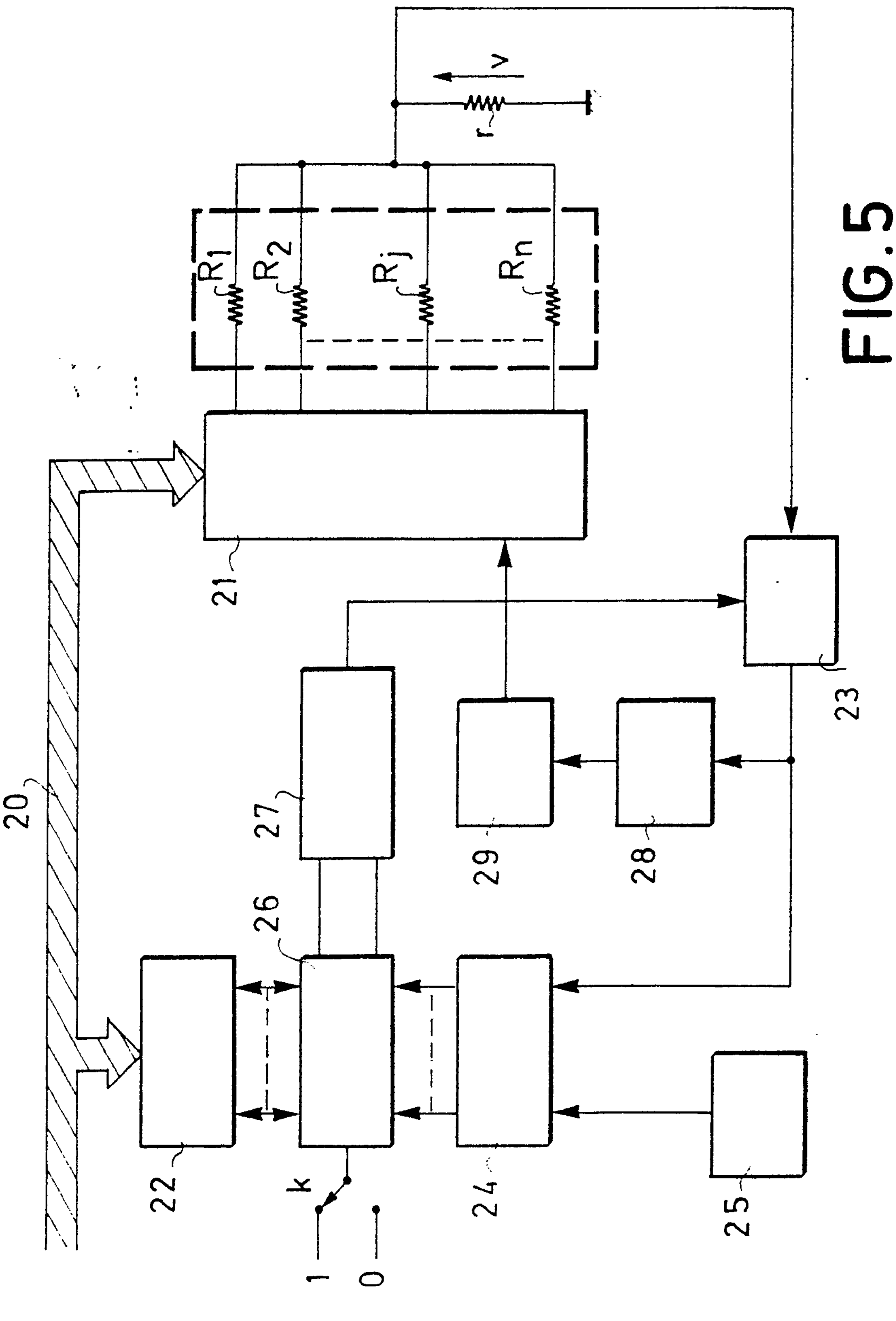


FIG. 5

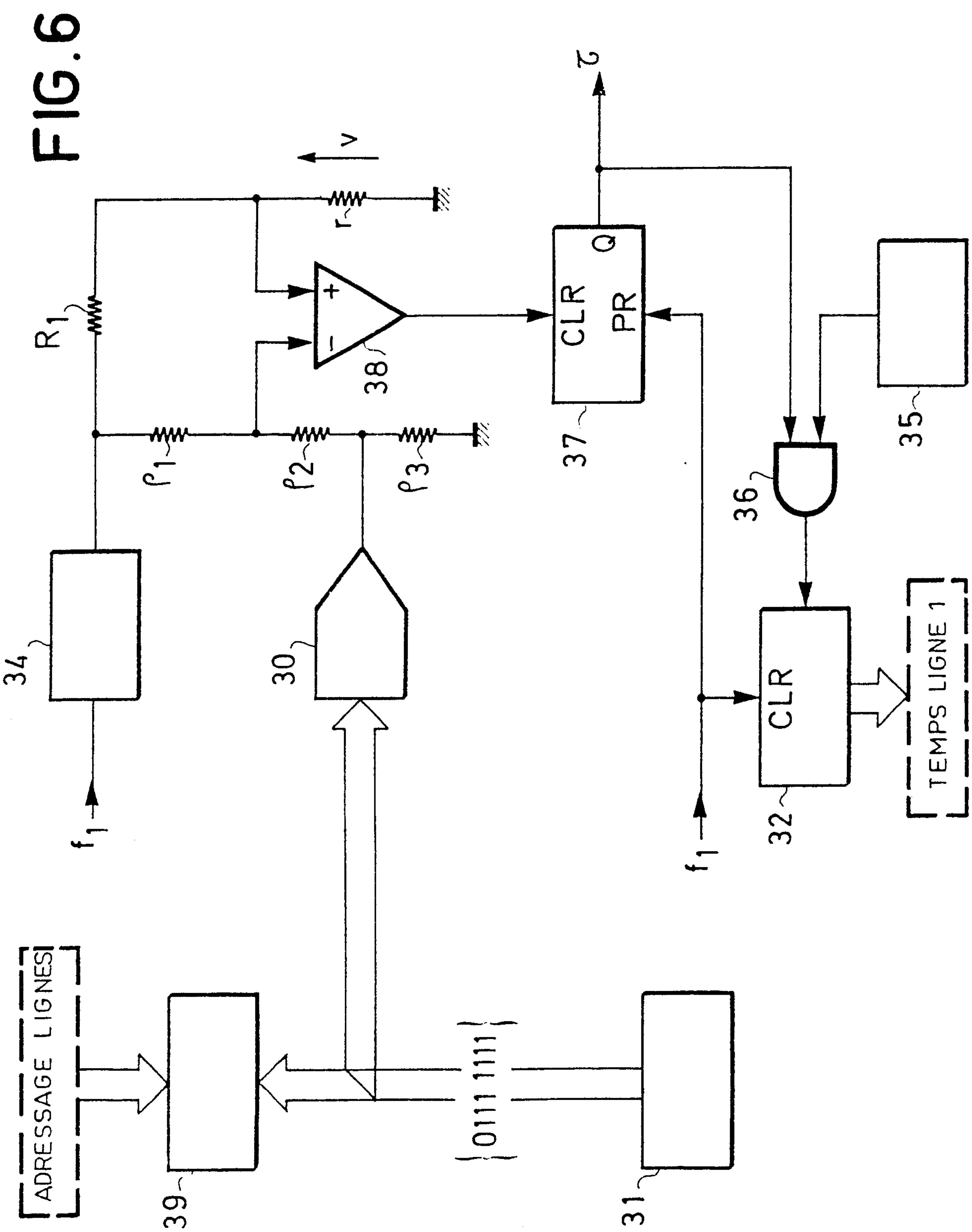

v
τ
R1
r
ρ1
ρ2
ρ3
38
CLR
PR
Q
37
34
30
f1
36
35
CLR
TEMPS LIGNE 1
32
f1
ADRESSAGE LIGNES
0111 1111
39
31


FIG. 6

FIG.7

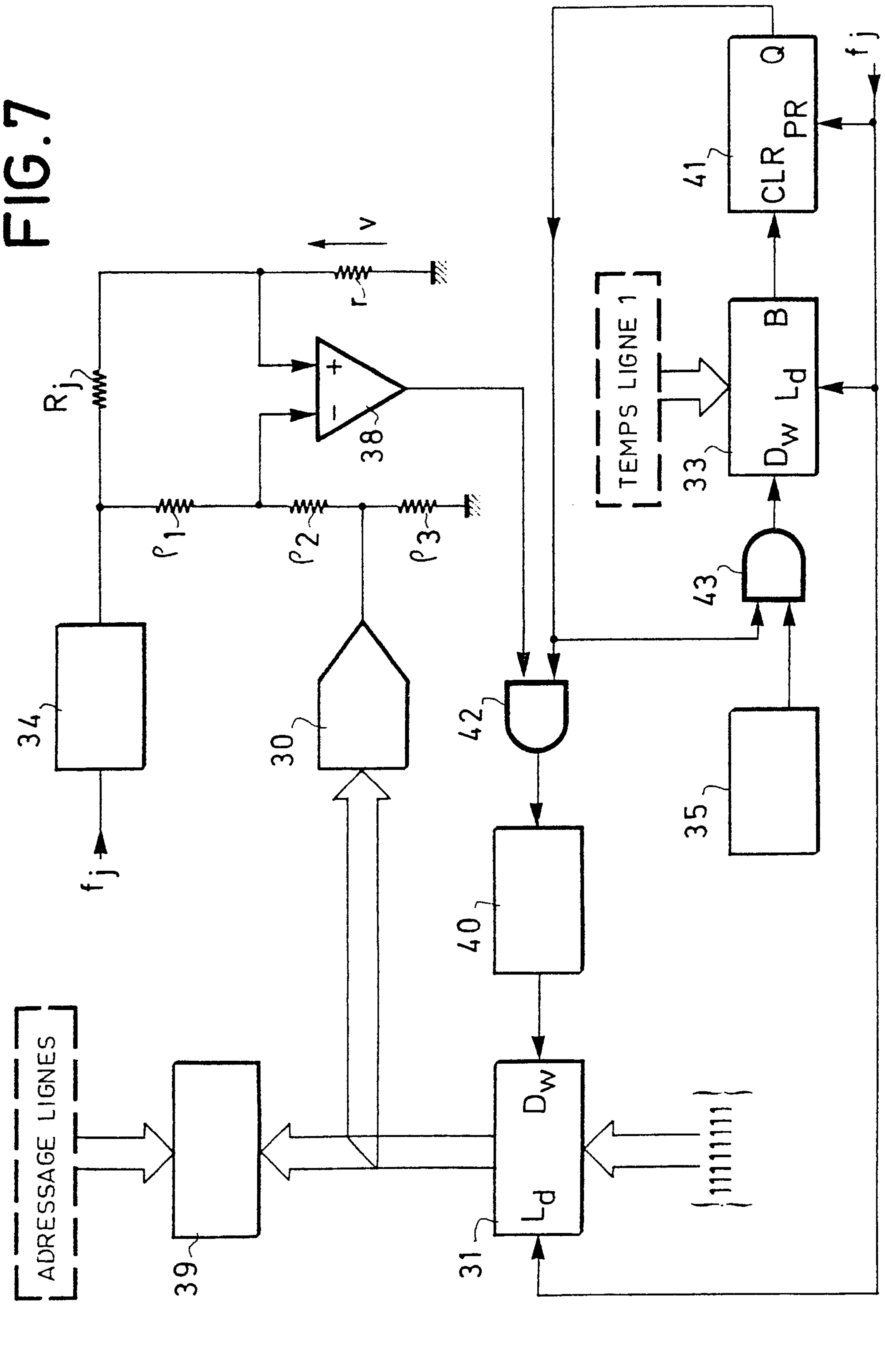

ADRESSAGE LIGNES
TEMPS LIGNE 1
39
31
40
42
30
34
38
33
35
43
41
CLR
PR
Q
B
$L_d$
$D_W$
$f_j$
$R_j$
r
v
$\rho_1$
$\rho_2$
$\rho_3$
11111111

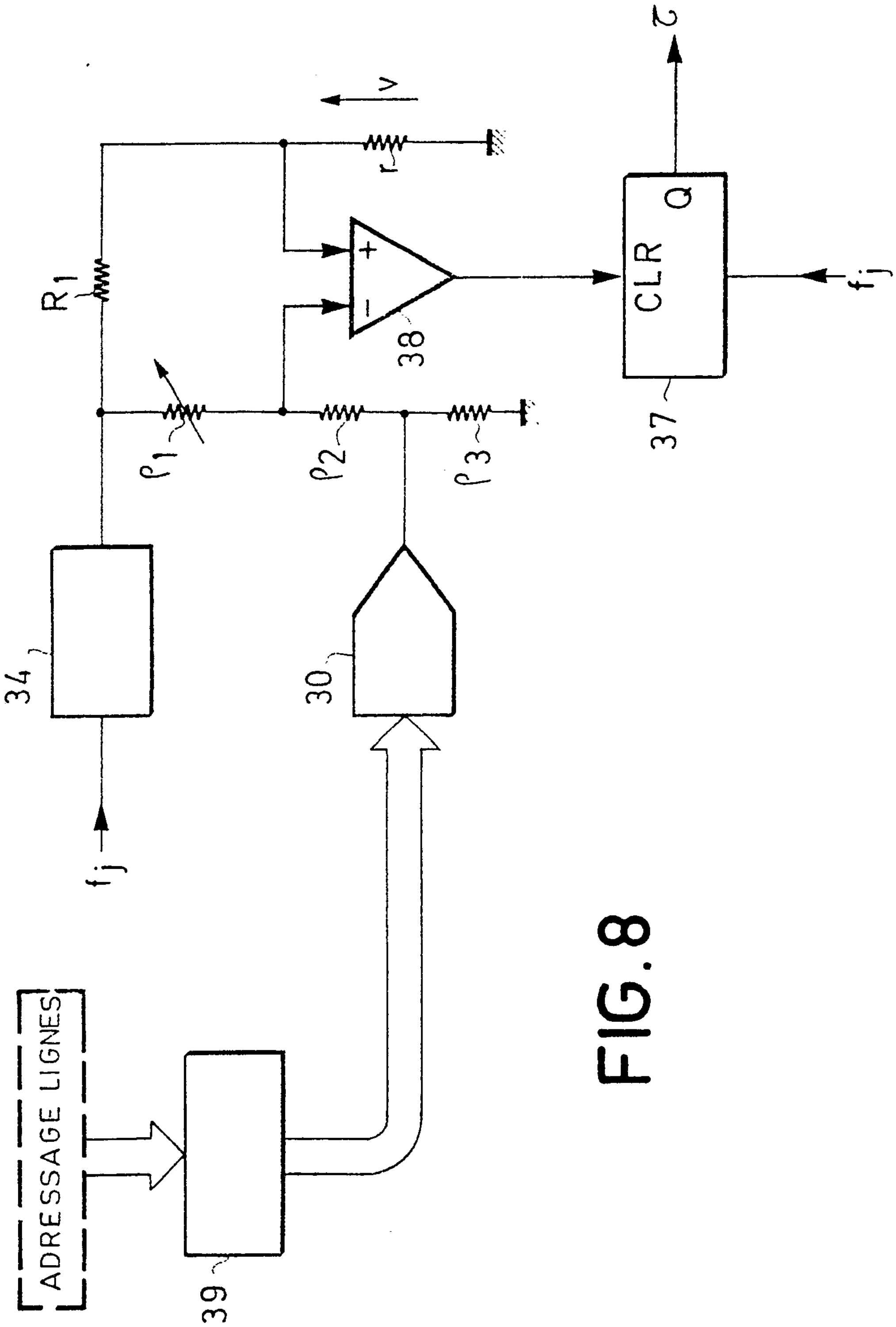
ADRESSAGE LIGNES
39
34
30
$f_j$
$R_1$
$\rho_1$
$\rho_2$
$\rho_3$
38
+
−
r
v
CLR
Q
37
$f_j$
$\tau$

FIG. 8